# EUROPÄISCHE PATENTSCHRIFT

(11) **EP 1 391 639 B1**
(45) Veröffentlichungstag und Bekanntmachung des Hinweises auf die Patenterteilung: **23.04.2008**
(21) Anmeldenummer: 03017234.0
(22) Anmeldetag: 30.07.2003
(51) Int. Cl.: F16H 61/40, F16H 61/44

(54) **Ölvolumenausgleich im Ölkreislauf des hydraulischen Fahrantriebes einer selbstfahrenden Arbeitsmaschine**
Oil volume compensation in a hydraulic circuit of a hydrostatic drive in an automotive working machine
Compensation du volume d'huile du circuit hydraulique d'une transmission hydrostatique de machine agricole

(30) Priorität: 17.08.2002 DE 10238614
(43) Veröffentlichungstag der Anmeldung: 25.02.2004
(73) Patentinhaber: CLAAS Selbstfahrende Erntemaschinen GmbH, 33428 Harsewinkel (DE)
(72) Erfinder: Dückinghaus, Heinrich, 33649 Bielefeld (DE); Schlichting, Dirk, 33100 Paderborn (DE); Strieker, Norbert, 33418 Verl (DE); Dittrich, Karsten, 01737 Grossopitz (DE)

(56) Entgegenhaltungen:
- DE-A1- 19 603 899
- US-A- 3 947 194
- US-A- 4 041 703
- US-A- 4 173 867
- US-A- 4 395 878

## Beschreibung

Die Erfindung betrifft ein Verfahren zum Ausgleich des Ölvolumens im Ölkreislauf des Fahrantriebes zwischen der von einem Dieselmotor angetriebenen Ölförderpumpe und dem Ölmotor einer Arbeitsmaschine, wobei dem Ölkreislauf für den Fahrantrieb ein zur ständigen Entnahme geringer Ölmengen aus dem Kreislauf zwecks Filterung und/oder Kühlung sowie eine dem Volumenausgleich schaffende Ölspeisepumpe zugeordnet sind und wobei ein, von einer ebenfalls von dem Dieselmotor antreibbaren weiteren Ölförderpumpe gespeister, zweiter Ölkreislauf vorgesehen ist, der unter Einsatz bekannter Steuerventile der Betätigung der der Arbeitsmaschine zugeordneter Arbeitsgeräte dient.

Moderne Arbeitsmaschinen, wie beispielsweise selbstfahrende Erntemaschinen benötigen, um die an sie gestellten Anforderungen hinsichtlich ihrer Arbeitsleistung während des Einsatzes auf dem Acker zufrieden stellen zu können, sehr viel Energie. Dies bedeutet den Einsatz von Verbrennungskraftmaschinen, vorzugsweise Dieselmotoren mit sehr großer Leistung, um die Antriebsenergie für die Hydropumpen und -motoren unter allen Erntebedingungen sicherzustellen. Die Dieselmotoren werden dabei während der Arbeit auf dem Acker mit konstant hoher Drehzahl gefahren. Letzteres gilt auch für die Speisepumpe zur Aufrechterhaltung der Vorspannung auf der Niederdruckseite, die in den Ölkreislauf des Fahrantriebs integriert ist. Für die Fahrt auf Straßen und Wegen wird diesen leistungsstarken Dieselmotoren jedoch nur ein Bruchteil ihrer maximalen Leistung abverlangt, sie werden im allgemeinen nur mit Leerlaufdrehzahl betrieben. Die dann immer noch erbrachte Leistung reicht völlig aus, um den hydraulischen Fahrantrieb mit höchster Leistungsstufe zu fahren, so dass derartige Arbeitsmaschinen immer noch die auf öffentlichen Straßen zulässige Höchstgeschwindigkeit erreichen. Für die Speisepumpe gilt ähnliches. Auch ihre Drehzahl reicht im allgemeinen bei Straßenfahrt aus, um den Volumenstrom im Ölkreislauf des hydraulischen Fahrantriebes bzw. um die Vorspannung auf der Niederdruckseite aufrecht zu erhalten. Stellt sich der Arbeitsmaschine jedoch plötzlich ein Hindernis, beispielsweise eine hohe Bordsteinkante oder ein zu überfahrender Sandhügel entgegen, reicht aufgrund des momentan hohen Ölbedarfs die Drehzahl der Speisepumpe nicht mehr aus um auch derartige Hindernisse mit hoher Geschwindigkeit zu überfahren. Um diesen Mangel zu beheben, werden in der Praxis schon Speisepumpen größerer Förderleistung eingesetzt, die auch unter den zuvor geschilderten Extrembedingungen ihre Funktion erfüllen, d.h. genügend Öl liefern. Der Einsatz großer Speisepumpen weist jedoch den Nachteil auf, dass die Speisepumpen während des Einsatzes auf dem Acker, also dort, wo Dieselmotoren mit konstant hoher Drehzahl betrieben werden, ständig zuviel Öl liefern, von dem ein beträchtlicher Teil über Überdruckventile in den Tank zurückgeführt werden muss. Die zum Betreiben einer größeren Speisepumpe und die zum Filtern und Kühlen des zuviel geförderten Öls ständig benötigte Mehrleistung des Dieselmotors, ist beträchtlich und auf Dauer völlig unwirtschaftlich.

In der US 4041703, die einen Betonmaschinenantrieb betrifft, wird der Arbeitsdruck über eine Blende mit dem Speisedruck verbunden.

Der vorliegenden Erfindung liegt daher das Problem zugrunde, eine Arbeitsmaschine der eingangs näher bezeichneten Art so auszugestalten, dass unter allen Bedingungen der erforderliche Speisedruck, bzw. der notwendige Volumenausgleich im Ölkreislauf des hydraulischen Fahrantriebs aufrecht erhalten bleibt und zwar nahezu ohne zusätzlichen Energieaufwand.

Diese Aufgabe wird erfindungsgemäß dadurch gelöst, dass dem zweiten Ölkreislauf bei Bedarf eine Ölmenge zum Volumenausgleich im Ölkreislauf für den Fahrantrieb entnommen wird. In einem solchen Falle wird also dem Ölkreislauf für die Arbeitshydraulik, der durch eine ständig laufende Pumpe auch während der Fahrt auf der Straße aufrecht erhalten bleibt, kurzfristig Öl entnommen und zwar nur dann, wenn die Speisepumpe aufgrund ihrer geringen Drehzahl die Aufrechterhaltung der Vorspannung auf der Niederdruckseite des Fahrantriebs nicht mehr gewährleisten kann. In einem solchen Fall wird also zusätzlich der von der Speisepumpe gelieferten zu geringen Ölmenge ein Teil des von der Pumpe für die Arbeitshydraulik gelieferten Öles hinzugefügt. Dies geschieht auf einfache Art und Weise dadurch, dass in den zweiten Ölkreislauf ein Steuerventil integriert ist, welches wahlweise den Ölstrom zu den Steuerventilen der Arbeitshydraulik oder in den Kreislauf für den Fahrantrieb leitet. Zweckmäßigerweise schaltet dieses Steuerventil selbsttätig. Zudem ist es zweckmäßig, wenn das in den zweiten Ölkreislauf integrierte Steuerventil einerseits durch Federkraft und andererseits durch den in einer vom Ölkreislauf der Fahrhydraulik abgezweigten Leitung anstehenden, gegen die Federkraft wirkenden Öldruck schaltbar ist.

Das in dem zweiten Ölkreislauf integrierte Steuerventil ist nach einem wesentlichen Merkmal der Erfindung derart aufgebaut, dass in der durch die Federkraft gegen den Öldruck der Fahrhydraulik verschobenen Stellung des Steuerschiebers des Steuerventiles der Ölstrom zum Kreislauf der Fahrhydraulik freigegeben ist. Andererseits ist der während des Betriebes der Fahrhydraulik im Ölkreislauf der Fahrhydraulik anstehende Druck stärker als die Fahrhydraulik und somit ist der Weg des Öles von der Ölförderpumpe zu den zugehörigen Steuerventilen freigegeben. Dabei gewährleistet die Speisepumpe den Volumenausgleich.

Ebenso wie die von der Speisepumpe gelieferte Ölmenge wird auch die dem Ölkreislauf für den Fahrantrieb aus dem zweiten Ölkreislauf zugeführte Ölmenge der jeweiligen Niederdruckseite der Fahrhydraulik zugeführt.

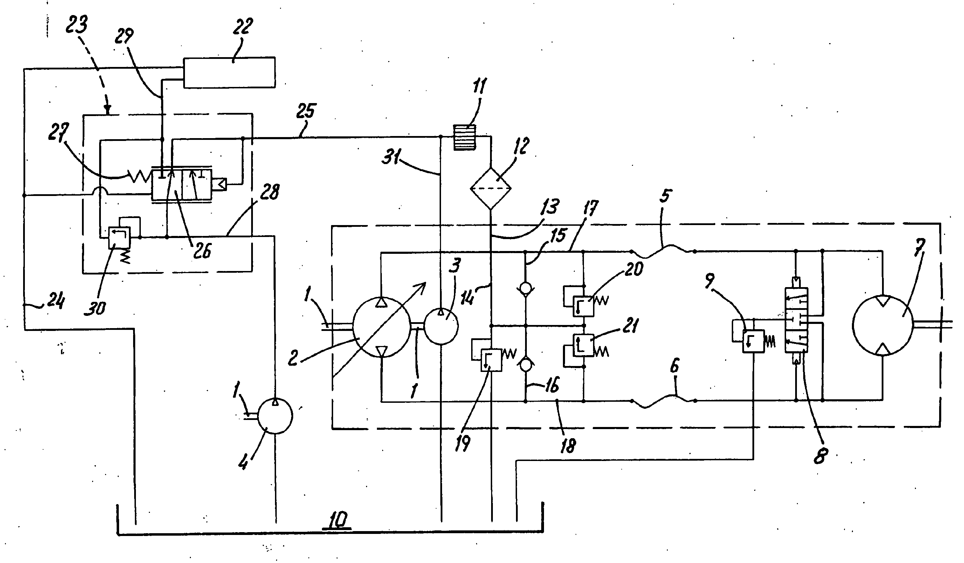

Im folgenden soll die Erfindung anhand eines hydraulischen Schaltplanes näher erläutert werden. Mit 1 ist dabei eine von einem nicht näher dargestellten Motor angetriebene Welle bezeichnet, durch welche sowohl die Pumpe 2 für den Fahrantrieb als auch die Speisepumpe 3 und die Pumpe 4 für die Arbeitshydraulik mit einer Drehzahl betrieben werden, die der Drehzahl des Motors in einem festen Übersetzungsverhältnis entspricht. Das von der Pumpe 2 geförderte Öl gelangt beispielsweise über die Schlauchleitung 5 zu dem Hydraulikmotor 7 und von diesem über die Leitung 6 zurück zur Pumpe 2. Die Pumpe 2 des Fahrantriebes kann in bekannter Weise auch so geschaltet werden, dass sie über die Leitung 6 Öl zu dem Hydraulikmotor 7 fördert und das Öl von diesem aus über die Leitung 5 zur Pumpe 2 zurückfließt. Von der im Kreislauf zwischen Pumpe 2 und Motor 7 befindlichen Ölmenge wird ständig über das Ventil 8 und das Überdruckventil 9 eine geringe Ölmenge entnommen und dem Tank 10 zugeführt. Durch die Speisepumpe 3 wird dem Tank 10 Öl entnommen, welches über einen Kühler 11 und einen Filter 12 dem Kreislauf der Fahrhydraulik zugeführt wird. Dies geschieht über die Leitungen 13 und 14 sowie entweder über die Leitung 15 oder die Leitung 16 und zwar in Abhängigkeit davon, welche der beiden Leitungen 17 bzw. 18 im momentanen Fahrbetrieb Niederdruck aufweist. Im allgemeinen soll an der Niederdruckseite ein Druck von ungefähr 25 bar anliegen. Um diesen Druck in etwa zu halten, ist der Leitung 13 bzw. der Leitung 14 ein Überdruckventil 19 zugeordnet, welches dann öffnet, wenn der Öldruck in der Leitung 13 25 bar überschreitet. Zusätzlich sind dem hydraulischen Fahrantrieb Ventile 20 und 21 zugeordnet, die der Druckabsicherung im gesamten System dienen und etwa bei 400 bar öffnen. Das Ventil 20 ist dabei der Leitung 17 und das Ventil 21 der Leitung 18 zugeordnet. Da der nicht dargestellte Motor während des Einsatzes auf dem Acker mit konstanter, relativ hoher Drehzahl arbeitet, fördern sowohl die Pumpe 2 als auch die Pumpe 3 relativ viel Öl. Das von der Pumpe 3 geförderte Öl dient zum einen dem Volumenausgleich in dem gesamten geschlossenen Kreislauf der Fahrhydraulik, da durch das Ventil 9 ständig eine begrenzte Menge Öl aus dem Ölkreislauf herausgenommen wird. Andererseits dient der von der Speisepumpe 3 geförderte Ölstrom zur Aufrechterhaltung der Vorspannung auf der jeweiligen Niederdruckseite in der Fahrhydraulik. Die Höhe des Speisedrucks ist hierbei von entscheidender Bedeutung um die beispielsweise durch Ölkompression oder Leitungsausdehnung auftretenden Ölverluste auszugleichen. Wie die Zeichnung erkennen lässt, weist die erfindungsgemäße Arbeitsmaschine einen zweiten Kreislauf und zwar einen Kreislauf für eine Arbeitshydraulik 22 auf. Diese Arbeitshydraulik 22 ist nicht näher dargestellt, da sie allgemein bekannt ist. Dieser Arbeitshydraulik 22 wird über die Pumpe 4 und wenigstens ein Ventil 23 Öl zugeführt, welches über die Leitung 24 zurück in den Tank 10 gelangt. Von dem Ventil 23 ist eine Leitung 25 abgezweigt, welche in die von der Speisepumpe 3 abzweigende Förderleitung 31 mündet. In der in der Figur dargestellten Lage ist der Steuerschieber 26 des Steuerventils 23 über eine Feder 27 soweit nach rechts verschoben, dass die Förderleitung 28 der Pumpe 4 mit der zur Fahrhydraulik abzweigenden Leitung 25 in Verbindung steht. Dies ist die Stellung, die das Ventil 23 beispielsweise bei ruhender Arbeitsmaschine und still stehendem Motor einnimmt. Bei eingeschaltetem Motor steht über die Speisepumpe 3 in der Leitung 25 ein so hoher Druck an, dass der Steuerschieber 26 entgegen der Kraft der Feder 27 nach links verschoben wird, so dass die Förderleitung 28 der Pumpe 4 mit der Zuführleitung 29 zur Arbeitshydraulik 22 verbunden ist. Diese zuvor beschriebene Stellung des Steuerschiebers 26 ist auch dann gewährleistet, wenn die Speisepumpe 3 mit nur geringer Drehzahl betrieben wird, was beispielsweise während der Fahrt auf öffentlichen Straßen der Fall ist.

Stellt sich der Arbeitsmaschine aber während der Fahrt auf Straßen plötzlich ein Hindernis beispielsweise in Form einer hohen Bordsteinkante oder eines Sandhügels entgegen, sackt aufgrund der geringen Förderleistung der Pumpe 3 der Öldruck in den Leitungen 25 und 31 plötzlich stark ab, so dass für den Zeitraum, die die Arbeitsmaschine benötigt, um das Hindernis zu überwinden, die Aufrechterhaltung der Vorspannung an der Niederdruckseite nicht mehr gewährleistet ist. In Abhängigkeit von der Fahrtrichtung steigt der Druck in der Leitung 5 oder 6 so schnell an, dass durch die Kompression des Hydrauliköls auf der Druckseite das entsprechende Volumen auf der Niederdruckseite fehlt. Kann bei geringer Speisepumpendrehzahl dieses fehlende Volumen nicht ausgeglichen werden, sinkt der Speisedruck wieder. Die Feder 27 des Ventils 23 ist nun so stark ausgelegt, dass sie den Steuerschieber 26 dann in die in der Figur dargestellten Lage nach rechts verschieben kann, sobald der druck in der Leitung 25 kleiner ist als etwa 20 bar. In diesem Moment steht also die Leitung 28 mit der Leitung 25 in Verbindung, so dass der von der Pumpe 4 generierte Ölstrom den Ölstrom der Pumpe 3 unterstützt und somit der für das einwandfreie Funktionieren der Fahrhydraulik erforderliche Druck an der Niederdruckseite gewährleistet ist.

Zur Absicherung des Ventils 23 und der Pumpe 4 ist diesen ein Überdruckventil 30 zugeordnet.

### BEZUGSZEICHENAUFSTELLUNG

- 1: Welle
- 2: Pumpe
- 3: Speisepumpe
- 4: Ölförderpumpe
- 5: Schlauchleitung
- 6: Leitung
- 7: Hydraulikmotor
- 8: Ventil
- 9: Überdruckventil
- 10: Tank
- 11: Kühler
- 12: Filter
- 13: Leitung
- 14: Leitung
- 15: Leitung
- 16: Leitung
- 17: Leitung
- 18: Leitung
- 19: Überdruckventil
- 20: Ventil
- 21: Ventil
- 22: Arbeitshydraulik
- 23: Steuerventil
- 24: Leitung
- 25: Leitung
- 26: Steuerschieber
- 27: Feder
- 28: Förderleitung
- 29: Zufuhrleitung
- 30: Überdruckventil
- 31: Leitung

## Patentansprüche

1. Verfahren zum Ausgleich des Ölvolumens im Ölkreislauf (5, 6) des Fahrantriebs zwischen der von einem Motor (1) angetriebenen Ölförderpumpe (2) und dem Ölmotor (7) einer Arbeitsmaschine, wobei dem Ölkreislauf für den Fahrantrieb ein zur ständigen Entnahme geringer Ölmengen aus dem Ölkreislauf sowie eine den Volumenausgleich schaffende Ölspeisepumpe (3) zugeordnet sind und wobei ein von einer ebenfalls von dem Motor antreibbaren weiteren Ölförderpumpe (4) gespeister zweiter Ölkreislauf (28) vorgesehen ist, der unter Einsatz bekannter Steuerventile der Betätigung der der Arbeitsmaschine zugeordneter Arbeitsgeräte dient,
**dadurch gekennzeichnet,**
**dass** dem zweiten Ölkreislauf (4, 28, 22, 24) bei Niederdruck eine Ölmenge zum Volumenausgleich zwecks Aufrechterhaltung des Speisedrucks im Ölkreislauf für den Fahrantrieb entnommen wird und wobei dem zweiten Ölkreislauf ein Steuerventil (23) zugeordnet ist, welches wahlweise den Ölstrom zu den Steuerventilen der Arbeitshydraulik (22) und/oder in den Kreislauf für den Fahrantrieb (2, 17, 5, 7, 6, 18) leitet.

2. Verfahren nach Anspruch 1,
**dadurch gekennzeichnet,**
**dass** die dem Ölkreislauf für den Fahrantrieb aus dem zweiten Ölkreislauf zugeführte Ölmenge der jeweiligen Niederdruckseite der Fahrhydraulik zugeführt wird.

3. Vorrichtung zur Durchführung des Verfahrens nach Anspruch 1,
**dadurch gekennzeichnet,**
**dass** in dem zweiten Ölkreislauf ein Steuerventil (23) zugeordnet ist, welches wahlweise den Ölstrom zu den Steuerventilen der Arbeitshydraulik (22) und/oder in den Kreislauf für den Fahrantrieb (2, 17, 5, 7, 6, 18) leitet.

4. Vorrichtung nach einem oder mehreren der vorhergehenden Ansprüche,
**dadurch gekennzeichnet,**
**dass** das Steuerventil (23), welches in dem zweiten .Ölkreislauf integriert ist, selbsttätig schaltet.

5. Vorrichtung nach einem oder mehreren der vorhergehenden Ansprüche,
**dadurch gekennzeichnet,**
**dass** das in den zweiten Ölkreislauf integrierte Steuerventil (23) einerseits durch Federkraft (Feder 27) und andererseits durch den in einer vom Ölkreislauf der Fahrhydraulik abgezweigten Leitung (25) anstehenden gegen die Federkraft wirkenden Öldruck schaltbar ist.

6. Vorrichtung nach einem oder mehreren der vorhergehenden Ansprüche,
**dadurch gekennzeichnet,**
**dass** in der durch die Federkraft (Feder 27) gegen den Öldruck der Fahrhydraulik verschobenen Stellung des Steuerschiebers (26) des Steuerventiles (23) der Ölstrom zum Kreislauf der Fahrhydraulik freigegeben ist.

7. Vorrichtung nach einem oder mehreren der vorhergehenden Ansprüche,
**dadurch gekennzeichnet,**
**dass** während des Betriebes der Fahrhydraulik und einem durch die Speisepumpe (3) gewährleisteten Volumenausgleich der Fahrhydraulik der am Ventil (23) im Ölkreislauf der Arbeitshydraulik durch die von der Fahrhydraulik abgezweigten Leitung (25) anstehde Druck größer ist als die Federkraft und wobei der Weg des Öles von der Ölförderpumpe (4) der Arbeitshydraulik zu den zugehörigen Steuerventilen freigegeben ist.

## Claims

1. A method of equalizing the volume of oil in the oil circuit (5, 6) of the drive between the oil feed pump (2) driven by a motor (1) and the oil engine (7) of a working machine, wherein the oil circuit for the drive is supplied with an oil feed pump (3) for the continuous removal of small amounts of oil from the oil circuit and for creating equalization of the volume, and wherein there is provided a second oil circuit (28) which is fed by a further oil feed pump (4) driven likewise by the motor and which through the use of known control valves serves to actuate the tools associated with the working machine,
**characterised in that**
at reduced pressure an amount of oil is taken from the second oil circuit (4, 28, 22, 24) for the purpose of equalizing the volume in order to maintain the feed pressure in the oil circuit for the drive, and wherein associated with the second oil circuit is a control valve (23) which conveys the oil flow optionally to the control valves of the working hydraulics (22) and/or into the circuit for the drive (2, 17, 5, 7, 6, 18).

2. A method according to Claim 1,
**characterised in that**
the amount of oil which is fed from the second oil circuit to the oil circuit for the drive is fed to the respective low pressure side of the drive hydraulics.

3. An apparatus for carrying out the method according to Claim 1,
**characterised in that**
associated with the second oil circuit is a control valve (23) which feeds the oil flow optionally to the control valves of the working hydraulics (22) and/or into the circuit for the drive (2, 17,5,7,6, 18).

4. An apparatus according to one or more of the preceding claims,
**characterised in that**
the control valve (23) which is integrated in the second oil circuit is actuated automatically.

5. An apparatus according to one or more of the preceding claims,
**characterised in that**
the control valve (23) integrated in the second oil circuit can be actuated, on the one hand, by elastic force (spring 27), and, on the other hand, by the oil pressure which acts against the spring force which prevails in a branch line (25) from the oil circuit of the drive hydraulics.

6. An apparatus according to one or more of the preceding claims,
**characterised in that**
when the slide (26) of the control valve (23) is in the position in which it has been displaced by the elastic force (spring 27) against the oil pressure of the drive hydraulics, the flow of oil is liberated to the circuit of the drive hydraulics.

7. An apparatus according to one or more of the preceding claims,
**characterised in that**
when the drive hydraulics are in operation, and when volume equalization of the drive hydraulics is being ensured by the feed pump (3), the pressure which prevails at the valve (23) in the oil circuit of the working hydraulics through the branch line (25) from the drive hydraulics is greater than the elastic force, and wherein the path of oil is liberated from the oil feed pump (4) of the working hydraulics to the associated control valves.

## Revendications

1. Procédé de compensation, dans le circuit d'huile (5, 6) de l'entraînement de circulation, du volume d'huile entre la pompe de refoulement d'huile (2) entraînée par le moteur (1) et le moteur à huile (7) d'une machine agricole, selon lequel au circuit de l'entraînement de circulation sont associées une soupape (8) prélevant dans ce circuit en permanence un faible débit d'huile ainsi qu'une pompe d'alimentation (3)) produisant la compensation du volume, et il est prévu un second circuit d'huile (28) alimenté par une autre pompe de refoulement d'huile (4) qui peut être entraînée par le moteur et qui, au moyen de soupapes de commande connues, sert à actionner les équipements de travail de la machine agricole, **caractérisé en ce que** dans le second circuit d'huile (4, 28, 22, 24), du côté basse pression est prélevé un débit d'huile servant à compenser le volume d'huile afin de maintenir la pression d'alimentation dans le circuit d'huile de l'entraînement de circulation, et à ce second circuit est affectée une soupape de commande (23) qui envoie de manière sélective le courant d'huile aux soupapes de commande de l'hydraulique de travail (22) et/ou au circuit d'huile de l'entraînement de circulation (2, 17, 5, 7, 6, 18).

2. Procédé selon la revendication 1, **caractérisé en ce que** le débit d'huile envoyé au circuit d'huile de l'entraînement de circulation à partir du second circuit d'huile arrive sur le côté basse pression de l'hydraulique de circulation.

3. Dispositif pour la mise en oeuvre du procédé selon la revendication 1, **caractérisé en ce qu'**au second circuit d'huile est affectée une soupape de commande (23) qui envoie de manière sélective le courant d'huile aux soupapes de commande de l'hydraulique de travail (22) et/ou au circuit d'huile de l'entraînement de circulation (2, 17, 5, 7, 6, 18).

4. Dispositif selon une ou plusieurs des revendications précédentes, **caractérisé en ce que** la soupape de commande (23) qui est intégrée au second circuit d'huile, fonctionne automatiquement.

5. Dispositif selon une ou plusieurs des revendications précédentes, **caractérisé en ce que** la soupape de commande (23) intégrée au second circuit d'huile peut être commutée d'un côté par la force d'un ressort (27) et de l'autre côté par la pression d'huile, agissant contre la force du ressort, qui règne dans une conduite en dérivation sur le circuit de l'hydraulique de circulation.

6. Dispositif selon une ou plusieurs des revendications précédentes, **caractérisé en ce que** quand, par l'action du ressort (27) s'opposant à la pression d'huile de l'hydraulique de circulation, le tiroir (26) de la soupape de commande (23) a coulissé, le courant d'huile en direction de l'hydraulique de circulation est libéré.

7. Dispositif selon une ou plusieurs des revendications précédentes, **caractérisé en ce que** quand l'hydraulique de circulation est en service et que sa compensation de volume est assurée par la pompe d'alimentation (3), la pression exercée sur la soupape (23) dans le circuit d'huile de l'hydraulique de travail par la conduite (25) dérivée de l'hydraulique de travail dépasse la force du ressort et ainsi est libéré le passage de l'huile allant de la pompe de refoulement (4) de l'hydraulique de travail aux soupapes de commande correspondantes.
